(19) **Europäisches Patentamt / European Patent Office / Office européen des brevets**

(11) **EP 1 876 676 A1**

(12) **EUROPEAN PATENT APPLICATION**

(43) Date of publication:
**09.01.2008 Bulletin 2008/02**

(51) Int Cl.:
*H01S 3/113* (2006.01)　　*H01S 3/06* (2006.01)
*H01S 3/08* (2006.01)　　*H01S 3/16* (2006.01)
*H01S 3/098* (2006.01)

(21) Application number: **07109224.1**

(22) Date of filing: **30.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **06.06.2006 IT MI20061103**

(71) Applicant: **Bright Solutions S.r.l.**
**27010 Cura Carpignano (PV) (IT)**

(72) Inventor: **Piccino, Giuliano**
**27028, SAN MARTINO SICCOMARIO (PV) (IT)**

(74) Representative: **Pesce, Michele et al**
**Giambrocono & C. S.p.A.**
**Via Rosolino Pilo, 19/B**
**20129 Milano (IT)**

(54) **Laser apparatus for generating high energy pulses of short duration, and process for generating said laser pulse**

(57)　The laser apparatus (1) for generating high energy pulses of short duration comprises a pumping laser source (2) and a miniaturized cavity (3) defined by a pair of mirrors (4, 5) in which an active crystal (6) and an absorber (7) are housed. The active crystal (6) presents a gain greater than 10 dB in double pass, said absorber (7) being a saturable absorber. The process for generating a laser pulse consists of generating a beam of modes within a cavity (3) and amplifying only one of the modes, so that the resultant signal presents a very limited duration but a very high intensity, with a spatial quality close to the diffraction limit.

**FIG. 2**

EP 1 876 676 A1

**Description**

The present invention relates to a laser apparatus for generating high energy pulses of short duration and to a process for generating said laser pulse.

Laser pulses having the stated characteristics (for example with a duration of less than 1 ns and energy of some hundreds of microjoules) are used in many applications, such as micro-machining, photomask repair, and telemetry.

The heat release is smaller than that which accompanies pulses with a duration of an order of magnitude longer, enabling for example more precise machining details to be obtained, with reduced probability of irregular fusion residues and fractures due to thermal stress.

Laser apparatuses with these characteristics are formed using low energy monolithic microchip laser sources for generating sub-nanosecond pulses of a few microjoules; the low energy pulses are then amplified to energy levels sufficient for the required applications (typically >10 $\mu$J).

Alternatively the laser pulses of the described type can be produced by lasers operating in locking mode, in which all the modes are generated and amplified, then suppressing the higher modes which are of no interest (typically by mechanical means such as perforated discs) to obtain only the fundamental mode.

However both microchip laser apparatuses and mode locking laser apparatuses have a very complex intrinsic structure as they are provided with a low power laser source and an amplifier for the low power pulse; this requires double electronic control and regulator circuits (for the laser source and for the amplifier), with risks for system reliability.

Moreover, the traditional devices (in particular the mode locking apparatus but also the microchip apparatus) are very costly (the amplifier is an element which contributes substantially to the overall apparatus cost).

The technical aim of the present invention is therefore to provide a laser apparatus for generating high energy pulses of short duration and a process for generating said laser pulse by which the stated technical drawbacks of the known art are eliminated; in particular, according to the invention the laser apparatus emits pulses with relatively high energies (more than 100 $\mu$J) of short duration (less than 1 ns) and with high spatial quality (i.e. the laser beam which propagates has a divergence limited by diffraction or, in other words, the laser beam opens as a cone during propagation to an extent close to the physically possible theoretical minimum).

Within the scope of this technical aim, an object of the invention is to provide an apparatus which is very simple and, in particular, does not necessarily have to be provided with an amplifier for low power laser pulses.

Another object of the invention is to provide an apparatus which is very reliable.

A further object of the invention is to provide an apparatus which is economical.

The technical aim, together with these and other objects, are attained according to the present invention by providing a laser apparatus for generating high energy pulses of short duration and a process for generating said laser pulses, in accordance with the accompanying claims.

Further characteristics and advantages of the invention will be more apparent from the description of a preferred but non-exclusive embodiment of the apparatus and process according to the invention, illustrated by way of non-limiting example in the accompanying drawings, in which:

Figures 1, 2, 3 show three different embodiments of the laser apparatus according to the invention;
Figure 4 is a diagram showing the characteristics of the laser beam obtained;
Figure 5 is a curve showing the gain as a function of the distance from the central geometrical axis of the active crystal; and
Figure 6 shows the intensity of the modes which propagate within the active crystal.

With reference to said figures, these show a laser apparatus for generating high energy pulses of short duration indicated overall by the reference numeral 1.

The laser apparatus 1 comprises a pumping laser source 2 and a miniaturized optical cavity 3, the term miniaturized meaning that it has a length of just a few centimetres (less than 15 millimetres in the preferred embodiments), defined by a pair of mirrors 4, 5, in which an active crystal 6 and an absorber 7 are housed.

A lens or optical system is provided between the laser source 2 and the mirror 5 to focus the pumping beam 8.

The laser apparatus is of the passive Q-switching type, i.e. its operation is based on solid state saturable absorbers (such as Cr:YAG), the resonant radiation absorption losses of which decrease as the radiation intensity increases; advantageously the initial absorber transmission is not greater than 0.5.

The laser source 2 typically comprises a pumping diode of power at least equal to (preferably greater than) 20 W (at peak).

The active crystal 6 is chosen such as to present a pumping light absorption which is sufficiently high to confine the population inversion into a small volume, hence making a high gain available seen from fundamental mode (typically >10 dB in double pass).

This is on condition that the characteristic absorption length of the active crystal 6 (typically between 1 and 2 mm) is such as to distribute the average power so as not to cause thermal fracture).

The active crystals 6 (or laser crystals) consist of Nd:GdV04, Nd:YV04, Nd:LSB, Nd:KGW, Nd:YLF and Nd:YAG with high doping (>1%); they represent examples (non-limiting) of adequate active crystals of high absorption; the effective absorption coefficient of these crystals is at least 5 cm$^{-1}$.

A first mirror 5 of the cavity is of high reflectivity for the resonant radiation and of high transmission for the pumping radiation. The other mirror 4 is partially reflecting at the resonant radiation and provides coupling towards the outside.

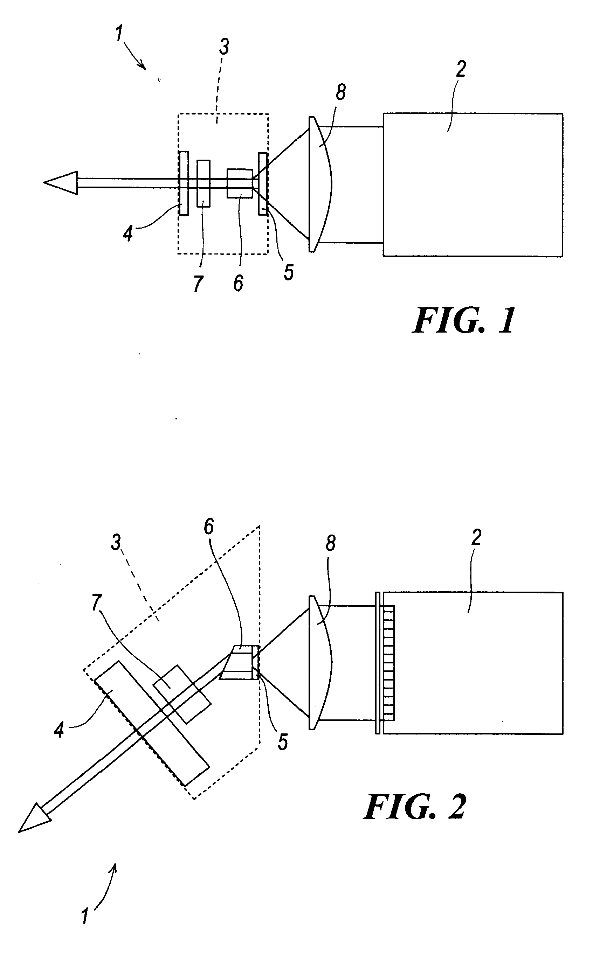

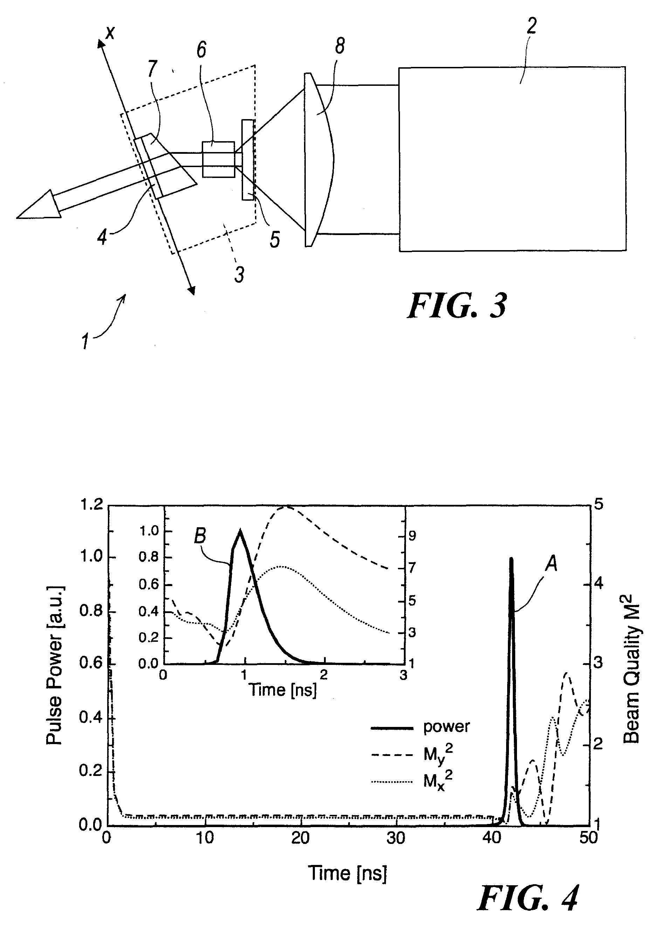

The active crystal 6 can have virtually parallel faces (solution shown in Figures 1 and 3), or one of them can be suitably inclined (preferably at the Brewster angle, solution shown in Figure 2), to increase the modal area within the active medium compared with that in the absorber, in order to favour:

- passive Q-switching;
- symmetrization of the spatial profile and of the divergence of the output beam.

In this respect, the condition which must be verified for generating a passive Q-switching pulse is provided by the inequality:

$$\frac{\ln(1/T_0^2)}{\ln(1/T_0^2) + \ln(1/R) + \Lambda} \frac{\sigma_a}{\sigma} \frac{A}{A_a} > \frac{\gamma}{1-\beta}$$

where To is the initial transmission of the saturable absorber, R is the reflectivity of the output coupler, $\Lambda$ the residual cavity losses, $\sigma$ the stimulated emission cross-section, $\sigma_a$ the absorption cross-section, A the area of the laser beam within the active medium and $A_a$ the area of the saturable absorber, $\gamma$ an intrinsic parameter of the laser crystal (dependent on the pulse duration with respect to the dynamics of the laser levels) and $\beta \approx 0.2$, the ratio between the absorption cross-section for excited states and $\sigma_a$. Given the values of the parameters in play, the preceding expression can in many practical cases be approximated to:

$$\frac{\sigma_a}{\sigma} \frac{A}{A_a} > 1$$

Consequently it can be deduced that if in a resonator with the laser beam cross-section roughly constant the inequality is only just respected, or slightly violated, it is advantageous to increase the area ratio.

If the crystal is prepared with the faces parallel to within just a few degrees, it can be advantageous for the efficiency of the laser system to line the most inner face of the cavity with a layer reflecting at pumping wavelength, which achieve a double travel path within the crystal.

The solid state saturable absorber 7 (typically Cr:YAG for a 1 $\mu$m laser, but non-limiting) has an initial transmission which is sufficiently low (typically <50%) in relation to the maximum gain made available by the active crystal 6, just as the mirror 5 (acting as the output coupler) must have a sufficiently low reflectivity (typically <50%) to obtain short energetic pulses, and to adequately suppress the weak oscillations which can follow the main pulse because of the slow relaxation of the lower laser level.

According to a particular embodiment (shown in Figure 3), the solid state saturable absorber 7 can have a cut face inclined at the Brewster angle and simply polished, without an antireflected layer, for the following reasons:

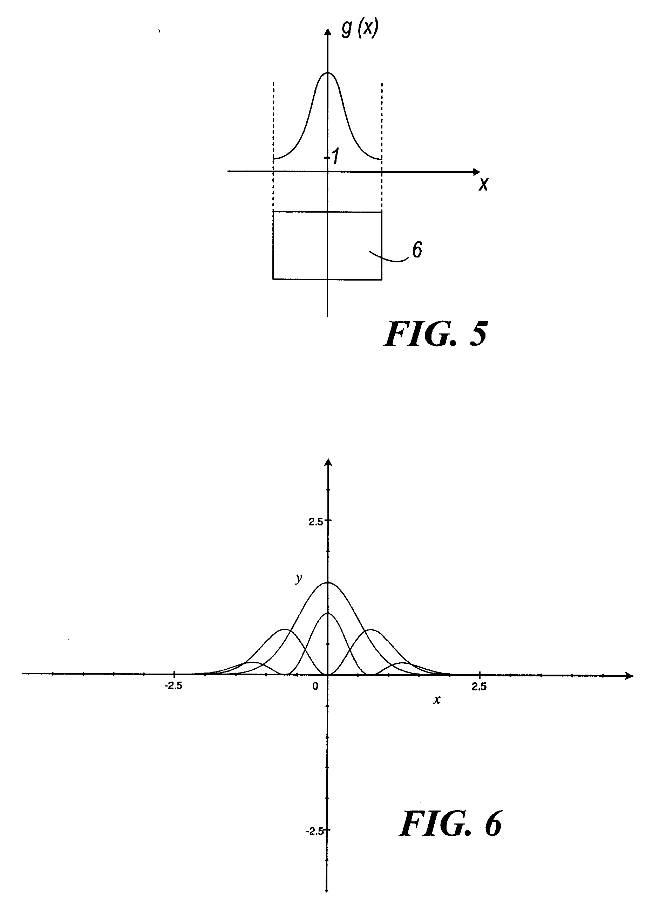

- the surfaces lined with dielectric reflecting or antireflected layers are characterized by lower damaging thresholds among the various elements of the cavity, hence by this means the risks of optical damage are reduced;
- the other face could be simply polished and without a reflecting layer acting as output coupler, for the same reason. The high gain made available by the active medium makes it practical to use the natural reflectivity level offered by the simple unlined output interface (about 8% for Cr:YAG);
- the level of saturable losses introduced by an absorber with this particular geometry is adjustable within a reasonably wide range by simply translating the saturable absorber element parallel to its base (Figure 5);
- the use of a saturable absorber with a face cut to the Brewster angle, jointly with the use of a laser crystal cut in the same manner, enables a laser radiation output axis to be obtained which is not very different from the pumping axis, so in some cases simplifying the mechanical production of the device.

By suitably choosing the transmission values of the saturable absorber 7 and of the mirror 5 acting as the output coupler in such a manner as to achieve a threshold gain (seen by the fundamental mode) of at least 10 dB (in double pass), it can be shown by numerical simulations (Figure 4, curve A) that the spatial gain profile acts as a spatial filter during the dynamics of constructing the Q-switching pulses, to form a permanent spatial mode within a few nanoseconds from the moment of exceeding the laser threshold for cavities of length about 10 mm and with pumping diameters of about 1 mm (Figure 4, curve A shows the characteristics of the pulse obtained).

Within this time range the action of the spatial gain profile also produces a progressive shrinkage of the resonant beam diameter compared with the pumping beam diameter, until the diffraction balances the effect, to typically obtain modal diameters of the order of 0.16 mm in cavities with flat mirrors of length 10 mm (Figure 3).

Together with the fact that attaining the so-called second threshold (the saturable losses saturation threshold) typically requires some tens of nanoseconds, the Q-switching pulse generated possesses an excellent spatial quality (M2<1.3).

The spatial quality obtained is optimised in practice and is not further improvable if the starting gain is >10 dB.

For completeness, it should be noted that non-linear effects such as absorption and gain saturation during actual pulse emission produce a slight widening of the beam to about 0.2 mm.

The mirrors at the ends of the cavity can be flat, concave or convex, chosen to obtain a beam which is not markedly focused on any optical element, hence reducing risks of damage.

By virtue of the spatial filtration effect operated by the gain distribution, the minimum diameter of the beam is not less than that minimum of the TEM00 mode of a stable cavity of length L of flat-concave type at minimum misalignment sensitivity, i.e. $2\sqrt{\lambda L_e}/\pi$ ($\lambda$ being the laser wavelength, $L_e$ the sum of the length/(refractive index) ratios of the various homogeneous elements which constitute the cavity).

An unstable resonator of low magnification (<2) can also be adequate for this application, the role of forming the laser beam spatial profile being largely delegated to the spatial gain profile.

The inventive idea is based on spatial filtration within a very short cavity (otherwise multimodal), by virtue of the high gain which acts as an effective spatial discrimination element, favoured by the slowness of the non-linear loss saturation process which typically requires about 1000 transits within the cavity, whereas the spatial filtration requires a number of transits comparable with the distance travelled by a beam of initial diameter D (comparable to the pumping diameter) to reach the far field (about $D^2/(\lambda L) \approx$ 10-100 transits). The assumptions for this idea are therefore:

-   a sufficiently absorbent laser material with stimulated emission cross-section and fluorescence time adequate to achieve a high gain;

-   the use of output couplers and saturable absorbers with an initial reflectivity and transmission which are conveniently low to require a laser gain of sufficiently high (>10 dB) threshold to operate the necessary filtration.

Moreover, the dynamic state of the pulse construction process enables, under determined conditions which nearly always exist in the case of miniaturized lasers, a similar filtration to be effected within the frequency domain by selecting the single longitudinal mode. The pulses produced in this manner are of high energy, with duration well under 1 ns, of relatively wide area (low risks of damage), limited by diffraction and possibly of single longitudinal mode.

An important aspect of the present invention is that the high gain necessary to operate the required spatial filtration simultaneously enables pulses to be obtained having a duration comparable with those (of lower energy) generated by microchip lasers, even though the typical microchip cavity is an order of magnitude shorter. This is because the duration of a Q-switching pulse decreases on increasing the initial gain, so tending towards the cavity transit time for sufficiently high gain levels, which are achieved more easily in the lasers of this invention than in the case of microchips.

For comparison, curve B of Figure 4 shows the construction dynamics of a pulse with ideal active Q-switching (instantaneous loss zeroing), which evidently does not have sufficient time to filter the individual spatial mode, hence producing a fairly poor spatial quality, M2>4.

For example (Figure 4), using a 150 W peak laser diode as laser source 2, a Nd:GdV04 active crystal 6 with a mirror 5 of high reflectivity (HR) at 1063 nm and high transmission (HT) at 808 nm directly disposed on the face of the active crystal 6, the other face being inclined at Brewster angle, a Cr:YAG crystal saturable absorber 7 with 20% transmission and a mirror 4 acting as output coupler with 20% reflectivity, the obtained pulses are of 0.5 mJ, 420 ps duration, linearly polarized with M2<1.2, and single longitudinal mode.

The measured modal diameter is of 0.22 mm, in agreement with the numerical simulations, the peak intensity being about 3 GW/cm$^2$, within the specified safety limits for the commercial lenses used.

The operation of the apparatus of the invention is apparent from that described and illustrated, and is substantially as follows.

When the laser source 2 strikes the active crystal 6 with a pumping beam, the active crystal 6 amplifies a plurality of modes within the cavity 3, but without the laser pulse being immediately emitted because of the high losses caused by the absorber 7.

The fundamental mode and the upper modes circulate within the cavity 3 and traverse (a plurality of times) the active crystal 6 and the absorber 7.

The active crystal 6 presents a gain (function of the pumping energy which strikes it), the pattern of which has a peak on its axis (Figure 5).

Consequently each time the modes traverse the active crystal 6 they are amplified in relation to the gain, and hence the low order modes which propagate concentrating their energy along the axis of the active crystal 6 undergo greater amplification whereas those of high order which propagate concentrating their energy along the lateral portions undergo lesser amplification (this aspect is illustrated in Figure 6 which shows the mode distribution within the active crystal 6, the mode F being the fundamental mode).

In practice, after a certain number of mode passages through the absorber 7 and the active crystal 6 (until the apparatus emits the laser pulse), the fundamental mode undergoes much greater amplification than all other modes, and a mode begins to circulate within the cavity which is limited by diffraction (i.e. which tends to propagate with minimum divergence established by the diffraction rule for a beam of assigned initial diameter d, equal to about $\lambda/d$) the cross-section of which is greater than that of the TEM00 mode (the mode limited by diffraction depending only on the geometrical characteristics of the cavity).

The present invention also relates to a process for generating the high energy laser pulse of short duration.

The process consists of generating a beam of modes within a cavity and amplifying only one of the low order modes, so that the resultant signal presents a very limited duration but a very high intensity.

Opportunely, that low order mode which is amplified is the fundamental mode, the gain seen by the fundamental mode being at least 10 dB.

In a different embodiment, the first mirror is disposed directly on the active crystal, the second mirror being disposed directly on the saturable absorber.

In a particular embodiment, that face of the active crystal farthest from the pumping beam presents a partially reflecting lining for the pumping radiation and is inclined by not more than 2° to improve the pumping efficiency.

It has been found in practice that the laser apparatus for generating high energy pulses of short duration and the process for generating said laser pulse according to the invention are particularly advantageous as they enable laser pulses to be obtained which, in addition to the required characteristics of limited duration and high energy, present a very good spatial quality (close to the diffraction limit).

The laser apparatus for generating high energy pulses of short duration and the process for generating said laser pulse conceived in this manner are susceptible to numerous modifications and variants, all falling within the scope of the inventive concept; moreover all details can be replaced by technically equivalent elements.

In practice the materials used and the dimensions can be chosen at will in accordance with requirements and with the state of the art.

## Claims

1. A laser apparatus (1) for generating high energy pulses of short duration comprising a pumping laser source (2) and a miniaturized cavity (3) defined by a pair of mirrors (4, 5) in which an active crystal (6) and an absorber (7) are housed, **characterised in that** said active crystal (6) presents a gain greater than 10 dB in double pass, and that said absorber (7) is a saturable absorber.

2. A laser apparatus (1) as claimed in claim 1, **characterised in that** the active crystal gain varies in a direction perpendicular to the mode propagation direction within its interior.

3. A laser apparatus (1) as claimed in one or more of the preceding claims, **characterised by** comprising a lens or optical system for focusing the pumping beam (8).

4. A laser apparatus (1) as claimed in one or more of the preceding claims, **characterised in that** said saturable absorber (7) is of Cr:YAG crystal type.

5. A laser apparatus (1) as claimed in one or more of the preceding claims, **characterised in that** the initial saturable absorber transmission is not greater than 0.5.

6. A laser apparatus (1) as claimed in one or more of the preceding claims, **characterised in that** the pumping laser source (2) presents a peak of at least 20 W.

7. A laser apparatus (1) as claimed in one or more of the preceding claims, **characterised in that** the active crystal (6) comprises a crystal of Nd:GdV04 or Nd:YV04 or Nd:LSB or Nd:KGW or Nd:YLF or Nd:YAG with high doping.

8. A laser apparatus (1) as claimed in one or more of the preceding claims, **characterised in that** the active crystal (6) presents substantially parallel faces.

9. A laser apparatus (1) as claimed in one or more of the preceding claims, **characterised in that** the active crystal (6) presents at least one inclined face.

10. A laser apparatus (1) as claimed in one or more of the preceding claims, **characterised in that** the inclined face of the active crystal (6) is inclined at the Brewster angle.

11. A laser apparatus (1) as claimed in one or more of the preceding claims, **characterised in that** the saturable absorber (7) presents parallel faces.

12. A laser apparatus (1) as claimed in one or more of the preceding claims, **characterised in that** the saturable absorber (7) presents at least one inclined face.

13. A laser apparatus (1) as claimed in one or more of the preceding claims, **characterised in that** the inclined face of the saturable absorber (7) is inclined at the Brewster angle.

14. A laser apparatus (1) as claimed in one or more of the preceding claims, **characterised in that** the inclined face of said saturable absorber (7) is polished, and does not present an antireflected layer.

15. A laser apparatus (1) as claimed in one or more of the preceding claims, **characterised in that** the mirrors (4, 5) defining the cavity (3) enable a beam to be obtained which is not markedly focused on any optical element.

16. A laser apparatus (1) as claimed in one or more of the preceding claims, **characterised in that** a first mirror (5) is disposed directly on the active crystal (6).

17. A laser apparatus (1) as claimed in one or more of the preceding claims, **characterised in that** the second mirror (4) is disposed directly on the saturable absorber (7).

18. A laser apparatus (1) as claimed in one or more of the preceding claims, **characterised in that** that face of the active crystal (6) farthest from the pumping beam (8) presents a partially reflecting lining for the pumping radiation and is inclined by not more than 2° to improve the pumping efficiency.

19. A laser apparatus (1) as claimed in one or more of the preceding claims, **characterised in that** the effective absorption coefficient of the active crystals (6) is at least 5 cm$^{-1}$.

20. A laser apparatus as claimed in one or more of the preceding claims, **characterised in that** said miniaturized cavity has a length less than 15 millimetres.

21. A process for generating a high energy laser pulse of short duration, consisting of generating a beam of modes within a cavity (3) and selectively amplifying at least one of the low order modes, so that the resultant signal presents a very limited duration but a very high intensity.

22. A process as claimed in the preceding claim, **characterised in that** the most amplified low order mode is the fundamental mode.

23. A process as claimed in the preceding claim, **characterised in that** the gain seen by the fundamental mode is of at least 10 dB.

*FIG. 1*

*FIG. 2*

**FIG. 3**

**FIG. 4**

**FIG. 5**

**FIG. 6**

European Patent Office

## EUROPEAN SEARCH REPORT

Application Number

EP 07 10 9224

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/213617 A1 (GENDRON DENIS J [CA]) 29 September 2005 (2005-09-29) | 1-4,7,8, 10-19, 21-23 | INV. H01S3/113 |
| Y | * paragraphs [0018] - [0025], [0074] - [0077]; figures 1,6 * ----- | 20 | ADD. H01S3/06 H01S3/08 |
| X | FULLER M ET AL: "High-gain end-pumped lasers" SUMMARIES OF PAPERS PRESENTED AT THE CONFERENCE ON LASERS AND ELECTRO-OPTICS, IEEE, US, vol. 6, 3 August 1998 (1998-08-03), pages 431-432, XP009088943 * the whole document * ----- | 1-3,6-8, 15 | H01S3/16 H01S3/098 |
| X | YUNG-FU CHEN ET AL: "Simultaneous Q-Switching and Mode-Locking in a Diode-Pumped Nd : YVO4 - Cr4+ : YAG Laser" IEEE JOURNAL OF QUANTUM ELECTRONICS, IEEE SERVICE CENTER, PISCATAWAY, NJ, US, vol. 37, no. 4, April 2001 (2001-04), XP011052602 ISSN: 0018-9197 * page 580, right-hand column - page 582, left-hand column; figures 1,2,4,9 * * page 584, left-hand column * ----- | 1-7,9, 11,15,16 | |
| Y | ZHENG Q ET AL: "LD-pumped single-frequency passively Q-switched green laser" OPTICS AND LASER TECHNOLOGY, ELSEVIER SCIENCE PUBLISHERS BV., AMSTERDAM, NL, vol. 34, no. 6, September 2002 (2002-09), pages 425-427, XP004374435 ISSN: 0030-3992 * page 426, left-hand column - page 427, left-hand column; figures 1,5 * ----- | 20 | |

TECHNICAL FIELDS SEARCHED (IPC)

H01S

-/--

The present search report has been drawn up for all claims

| Place of search | Date of completion of the search | Examiner |
|---|---|---|
| Munich | 4 September 2007 | Laenen, Robert |

EPO FORM 1503 03.82 (P04C01)

**European Patent Office**

## EUROPEAN SEARCH REPORT

Application Number

EP 07 10 9224

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NG S P ET AL: "High power passively Q-switched Nd:GdVO4 lasers" OPTICS COMMUNICATIONS, NORTH-HOLLAND PUBLISHING CO. AMSTERDAM, NL, vol. 229, no. 1-6, 2 January 2004 (2004-01-02), pages 331-336, XP004480940 ISSN: 0030-4018 * the whole document * ----- | 1-4,7,8, 11,15 | |
| A | NG ET AL: "Short pulse passively Q-switched Nd:GdYVO4 laser using a GaAs mirror" OPTICS COMMUNICATIONS, NORTH-HOLLAND PUBLISHING CO. AMSTERDAM, NL, vol. 259, no. 1, 1 March 2006 (2006-03-01), pages 256-260, XP005251354 ISSN: 0030-4018 * the whole document * ----- | 1-4,7,8, 11,15 | |
| | | | **TECHNICAL FIELDS SEARCHED (IPC)** |

The present search report has been drawn up for all claims

| Place of search | Date of completion of the search | Examiner |
|---|---|---|
| Munich | 4 September 2007 | Laenen, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 10 9224

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2007

| Patent document cited in search report | Publication date | Patent family member(s) | | Publication date |
|---|---|---|---|---|
| US 2005213617 A1 | 29-09-2005 | AU | 2002322917 A1 | 10-03-2003 |
| | | WO | 03019739 A2 | 06-03-2003 |
| | | CA | 2456445 A1 | 06-03-2003 |
| | | EP | 1419564 A2 | 19-05-2004 |
| | | JP | 2005500705 T | 06-01-2005 |
| | | US | 2004190563 A1 | 30-09-2004 |

EPO FORM P0459

For more details about this annex : see Official Journal of the European Patent Office, No. 12/82